# EUROPEAN PATENT APPLICATION

(11) **EP 2 990 926 A1**
(43) Date of publication of application: **02.03.2016**
(21) Application number: 15179789.1
(22) Date of filing: 05.08.2015
(51) Int. Cl.: G06F 3/0488, G06F 3/0485, G06F 3/0481, H04M 1/725

(54) **MOBILE TERMINAL AND CONTROL METHOD THEREOF**

(30) Priority: 01.09.2014 KR 20140115471
(71) Applicant: LG Electronics Inc., Yeongdeungpo-gu Seoul 150-721 (KR)
(72) Inventor: KIM, Chikook, 137-893 Seoul (KR); LIM, Jeongsook, 137-893 Seoul (KR); KIM, Mijin, 137-893 Seoul (KR)
(74) Representative: Ter Meer Steinmeister & Partner

(57) **Abstract**

The present disclosure provides a mobile terminal capable of providing information stored therein in a simplified manner, the mobile terminal including a touch screen (151) configured to display one of a plurality of home screen pages, a wireless communication unit (110) that is configured to perform communication with an external server, and a controller (180) configured to generate a widget page associated with information, when the information is received from the external server through the wireless communication unit (110), wherein the widget page is a newly-generated home screen page, different from the plurality of home screen pages.

## Description

### CROSS-REFERENCE TO RELATED APPLICATION

This application claims the benefit of earlier filing date and right of priority to Korean Application No. 10-2014-0115471, filed on September 1, 2014, the contents of which is incorporated by reference herein in its entirety.

### BACKGROUND OF THE DISCLOSURE

### 1. Field of the Disclosure

This specification relates to a mobile terminal capable of providing information stored therein in a simplified manner.

### 2. Background of the Disclosure

Terminals may be generally classified as mobile/portable terminals or stationary terminals according to their mobility. Mobile terminals may also be classified as handheld terminals or vehicle mounted terminals according to whether or not a user can directly carry the terminal.

As it becomes multifunctional, a mobile terminal can be allowed to capture still images or moving images, play music or video files, play games, receive broadcast and the like, so as to be implemented as an integrated multimedia player.

Efforts are ongoing to support and increase the functionality of mobile terminals. Such efforts include software and hardware improvements, as well as changes and improvements in the structural components.

Such diversified and complicated functions of the mobile terminal bring about several user inconvenience in using them. Accordingly, various technologies for providing various functions to the user in an easier and more convenient manner have been developed.

The present disclosure proposes various methods for providing the user with more convenient environments.

### SUMMARY OF THE DISCLOSURE

Therefore, an aspect of the detailed description is to provide a method for fast checking information on a home screen page.

Another aspect of the detailed description is to provide a function linked to an updated event simply on a home screen page.

To achieve these and other advantages and in accordance with the purpose of this specification, as embodied and broadly described herein, there is provided a mobile terminal including a display unit that is configured to display one of a plurality of home screen pages, a wireless communication unit that is configured to perform communication with an external server from which information is downloadable, and a controller that is configured to generate a widget page associated with information when the information is received from the external server through the wireless communication unit. The widget page may be a newly-generated home screen page, which is different from the plurality of home screen pages.

In one embodiment disclosed herein, the controller may release a setting of the widget page as a home screen page, in response to a preset touch input, while the widget page is output on the display unit.

In one embodiment disclosed herein, on one region of the display unit may be displayed graphic objects which indicate the plurality of home screen pages and the widget page, respectively. The controller may control the graphic object indicating the widget page to be vanished from the display unit, when a preset control command is applied while the widget page is displayed on the display unit.

In one embodiment disclosed herein, the controller may output an icon associated with the widget page on one region of one of the plurality of home screen pages, when the setting of the widget page as the home screen page is released. The controller may output the widget page on the display unit when the icon associated with the widget page is selected.

In one embodiment disclosed herein, the controller may output a thumbnail image indicating the widget page between at least two home screen pages of the plurality of home screen pages, when the at least two home screen pages are displayed together on one region of the display unit.

In one embodiment disclosed herein, the controller may output the widget page on the display unit, in response to a preset touch input applied to the thumbnail image indicating the widget page.

In one embodiment disclosed herein, when the widget page is provided in plurality, a thumbnail image indicating each of the plurality of widget pages may be output. The controller may output a widget page, which is indicated by one thumbnail image of the plurality of thumbnail images, on the display unit when a preset touch input is applied to the one thumbnail.

In one embodiment disclosed herein, a graphic object associated with the widget page may be output on one of the plurality of home screen pages. The controller may change at least one of a shape, a color, a size and an animation effect of the graphic object when the information is received from the external server.

In one embodiment disclosed herein, the controller may output the widget page including the information received from the external server on the display unit, in response to a selection of the graphic object associated with the widget page.

In one embodiment disclosed herein, the controller may control the display unit to output the widget page on a lock screen indicating a lock state when the information is received from the external server in the lock state. Here, the lock state may be a state of restricting an execution of a control command received from a user.

In one embodiment disclosed herein, the controller may output the received information on the lock screen by a user selection with respect to the widget page, while the lock state is maintained.

In one embodiment disclosed herein, the controller may output a graphic object indicating the widget page on the lock screen when the information is received from the server. Here, the controller may output the widget page on the lock screen, in response to the graphic object being selected.

In one embodiment disclosed herein, the controller may control the widget page to be vanished from the lock screen, in response to a preset touch input applied to the widget page.

In one embodiment disclosed herein, the external server may be preset by the user. The information received from the external server may be information meeting a preset condition. An information list including items corresponding to a plurality of information received from the external server may be displayed on the widget page.

In one embodiment disclosed herein, the display unit may output the one of the plurality of home screen pages, and the controller may output the widget page, other than the one home screen page, on the display unit when the widget page is generated.

In one embodiment disclosed herein, the controller may output the widget page on the display unit, in response to a user control command, when the widget page is generated.

To achieve these and other advantages and in accordance with the purpose of this specification, as embodied and broadly described herein, there is provided a control method for a mobile terminal, the method including receiving information from an external server while one of a plurality of home screen pages is output on a display unit, generating a widget page associated with the information when the information is received and then outputting notification information notifying the generation of the widget page on at least part of the one home screen page, and outputting the widget page on the display unit when the notification information is selected. The widget page may be a newly-generated home screen page, which is different from the plurality of home screen pages, and may include information downloaded from the external server.

In one embodiment disclosed herein, the control method may further include controlling the widget page to be vanished from the display unit, in response to a preset touch input applied to the widget page.

In one embodiment disclosed herein, one of the plurality of home screen pages may be output on the display unit when the widget page is vanished from the display unit. At least part of the one home screen page and at least part of another home screen page, which is different from the one home screen page, among the plurality of home screen pages, may be output together when a preset touch input applied to the one home screen page is sensed. A graphic object indicating the widget page may be output on a region between the one home screen page and the another home screen page, when the at least part of the one home screen page and the at least part of the another home screen page are output together.

In one embodiment disclosed herein, the widget page may be output on the display unit, in response to the selection of the graphic object indicating the widget page.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1A is a block diagram of a mobile terminal in accordance with the present disclosure;
FIGS. 1B and 1C are conceptual views illustrating one example of the mobile terminal, viewed from different directions;
FIGS. 2A(a), 2A(b), 2B(a), 2B(b), 2C(a) and 2C(b) are conceptual views illustrating a home screen page in accordance with one embodiment disclosed herein;
FIG. 3 is a flowchart illustrating a control method for a mobile terminal in accordance with the present disclosure;
FIGS. 4(a) to 4(d) are conceptual views illustrating the control method of FIG. 3;
FIGS. 5(a) to 5(c) are conceptual views illustrating a method of notifying a reception of information from an external server, in a mobile terminal in accordance with one embodiment disclosed herein;
FIGS. 6(a) to 6(c) are conceptual views illustrating a control method after a widget page is vanished, in a mobile terminal in accordance with one embodiment disclosed herein;
FIGS. 7(a) to 7(b), 8A(a) to (d) and 8B(a) to 8B(b) are conceptual views illustrating a method of re-outputting a widget page;
FIGS. 9A(a) to 9A(c), 9B(a) to 9B(b) and 10(a) to 10(b) are conceptual views illustrating a method of providing a widget page on a lock screen;
FIGS. 11A(a) to 11A(b), 11B(a) to 11B(b) and 11C(a) to 11C(c) are conceptual views illustrating a method of checking information included on a widget page, through the widget page;
FIGS. 12(a) to (d) are conceptual views illustrating a method of setting a condition related to information received from an external server; and
FIGS. 13A, 13B(a) to 13B(b), 13C(a) to 13C(c) and FIGS. 14A and 14B(a) to 14B(b) are conceptual views illustrating various embodiments using a widget page.

### DETAILED DESCRIPTION OF THE DISCLOSURE

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

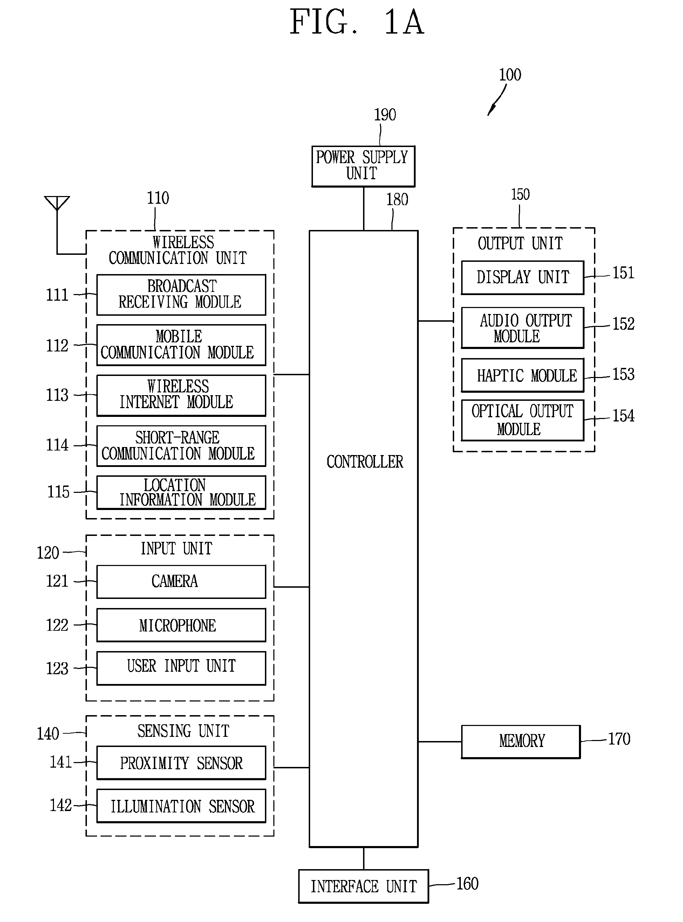

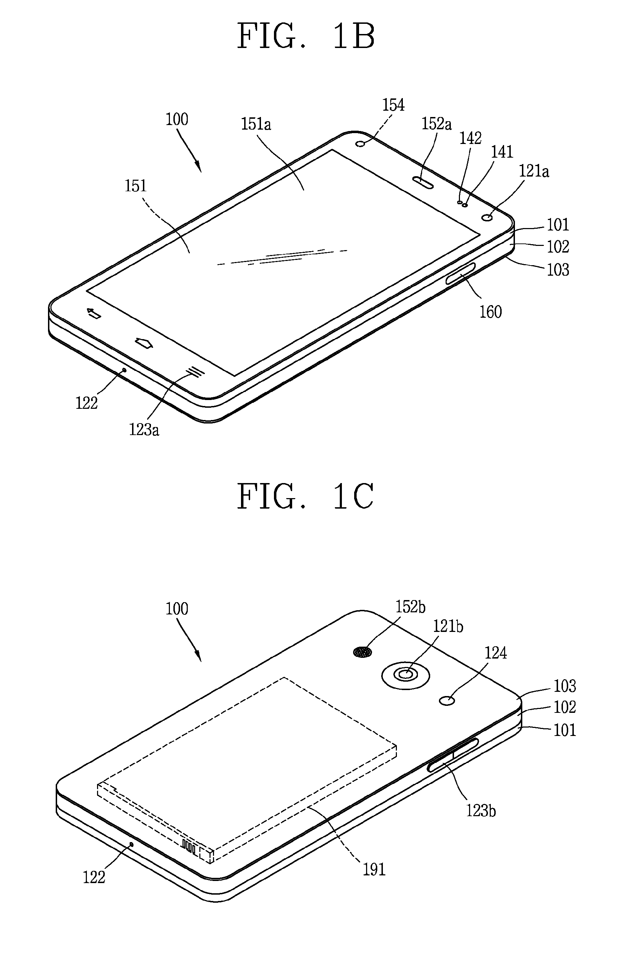

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151 a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121 b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151 a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151 a and a display on a rear surface of the window 151 a, or a metal wire which is patterned directly on the rear surface of the window 151 a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1 A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151 a of the display unit 151 will typically include an aperture to permit audio generated by the first audio output module 152a to pass. One alternative is to allow audio to be released along an assembly gap between the structural bodies (for example, a gap between the window 151 a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121 a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121 b is shown located at the rear side of the terminal body and includes an image capturing direction that is substantially opposite to the image capturing direction of the first camera unit 121 a. If desired, second camera 121 a may alternatively be located at other locations, or made to be moveable, in order to have a different image capturing direction from that which is shown.

The second camera 121 b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121 b. When an image of a subject is captured with the camera 121 b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

A communication system which is operable with the variously described mobile terminals will now be described in more detail. Such a communication system may be configured to utilize any of a variety of different air interfaces and/or physical layers. Examples of such air interfaces utilized by the communication system include Frequency Division Multiple Access (FDMA), Time Division Multiple Access (TDMA), Code Division Multiple Access (CDMA), Universal Mobile Telecommunications System (UMTS) (including, Long Term Evolution (LTE), LTE-A(Long Term Evolution-Advanced)), Global System for Mobile Communications (GSM), and the like.

By way of a non-limiting example only, further description will relate to a CDMA communication system, but such teachings apply equally to other system types including a CDMA wireless communication system as well as OFDM(Orthogonal Frequency Division Multiplexing) wireless communication system. A CDMA wireless communication system generally includes one or more mobile terminals (MT or User Equipment, UE) 100, one or more base stations (BSs, NodeB, or evolved NodeB), one or more base station controllers (BSCs), and a mobile switching center (MSC). The MSC is configured to interface with a conventional Public Switched Telephone Network (PSTN) and the BSCs. The BSCs are coupled to the base stations via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs can be included in the CDMA wireless communication system.

Each base station may include one or more sectors, each sector having an omni-directional antenna or an antenna pointed in a particular direction radially away from the base station. Alternatively, each sector may include two or more different antennas. Each base station may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations may also be referred to as Base Station Transceiver Subsystems (BTSs). In some cases, the term "base station" may be used to refer collectively to a BSC, and one or more base stations. The base stations may also be denoted as "cell sites." Alternatively, individual sectors of a given base station may be referred to as cell sites.

A broadcasting transmitter (BT) transmits a broadcast signal to the mobile terminals 100 operating within the system. The broadcast receiving module 111 of FIG. 1A is typically configured inside the mobile terminal 100 to receive broadcast signals transmitted by the BT.

Global Positioning System (GPS) satellites for locating the position of the mobile terminal 100, for example, may cooperate with the CDMA wireless communication system. Useful position information may be obtained with greater or fewer satellites than two satellites. It is to be appreciated that other types of position detection technology, (i.e., location technology that may be used in addition to or instead of GPS location technology) may alternatively be implemented. If desired, at least one of the GPS satellites may alternatively or additionally be configured to provide satellite DMB transmissions.

Hereinafter, embodiments associated with a control method which can be implemented in the mobile terminal having such configuration will be described with reference to the accompanying drawings. It is obvious to those skilled in the art that the present disclosure can be specified into other particular forms without departing from the spirit and essential features of the present disclosure.

Hereinafter, description will first be given of a home screen page and an object included in the home screen page, and then given of a home screen page and a control method for an object included therein.

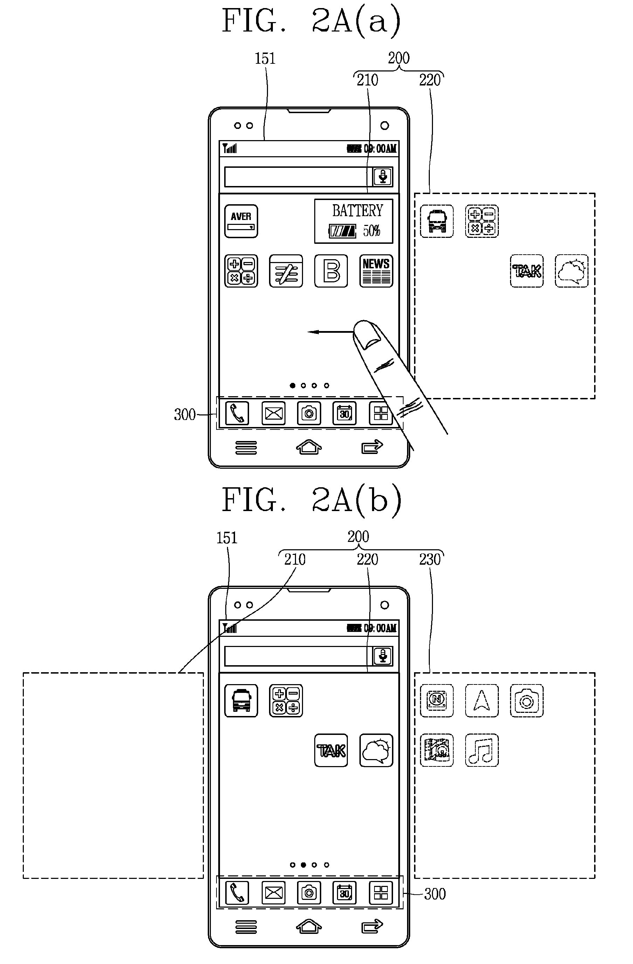

FIGS. 2A(a), 2A(b), 2B(a), 2B(b), 2C(a) and 2C(b) are conceptual views illustrating a home screen page in a mobile terminal according to the present disclosure.

A controller 180 (see FIG. 1) of a mobile terminal according to one embodiment may output an idle screen, a home screen, a menu screen or a lock screen on a display unit. At least one object may be included in the idle screen, the home screen, the menu screen or the lock screen, and the object may be an icon or a widget associated with an application installed in the mobile terminal.

Here, each icon may indicate a function of executing an application associated therewith. Also, the widget is a type of an application program which can immediately use at least part of information related to an application associated thereto on the idle screen, the home screen page, the menu screen or the lock screen, without outputting an execution screen of the application. That is, the user may be able to use the at least part of information related to the widget-associated application through the widget without execution of the application, unlike executing the application and displaying the whole information.

Meanwhile, the idle screen, the home screen, the menu screen or the lock screen, as illustrated in (a) of FIG. 2A, may include a plurality of home screen pages (or pages) 210 and 220) according to a user selection or according to the number of applications installed in the terminal.

On the idle screen, the home screen or the menu screen, as illustrated in (a) of FIG. 2A, may be provided an identification (indication) information region indicating which one of a plurality of home screen pages include currently-output objects, and a home screen page 200 on which those objects are displayable. In addition, on the idle screen, the home screen or the menu screen may further be included a basic region 300 on which icons corresponding to specific applications preset by a user selection or by the controller 180 are fixedly displayed.

The icons displayed on the basic region 300 may be continuously output on the basic region 300 even if a currently-output home screen page 210 is switched into another home screen page 220.

Hereinafter, without separate division of the terms of the idle screen, the home screen page or the menu screen, description will be given of "home screen page" in which objects such as icons and widgets may be included.

The home screen page may be large in size to correspond to the display unit 151 (see FIG. 1), and include a preset number of objects such that the user can easily recognize those objects.

Also, in response to a touch gesture applied by the user, a home screen page currently output on the display unit 151 may be switched into another home screen page, which is different from the currently-output home screen page. Here, the touch gesture may be various types of touches, such as a flicking touch, a drag touch, a short touch and the like. Hereinafter, a case where a drag input is applied to the home screen page will be described, but the present disclosure may also equally be applicable to a case of applying a flicking touch to the home screen page.

That is, the controller 180 may switch the first home screen page 210 currently output on the display unit 151 as illustrated in (a) of FIG. 2A, into the second home screen page 220 as illustrated in (b) of FIG. 2A.

Although not illustrated, more home screen pages, such as third and fourth home screen pages may be output on the display unit 151, as well as the first and second home screen pages 210 and 220. The number of home screen pages may be decided by a user selection or by the number of applications installed in the terminal.

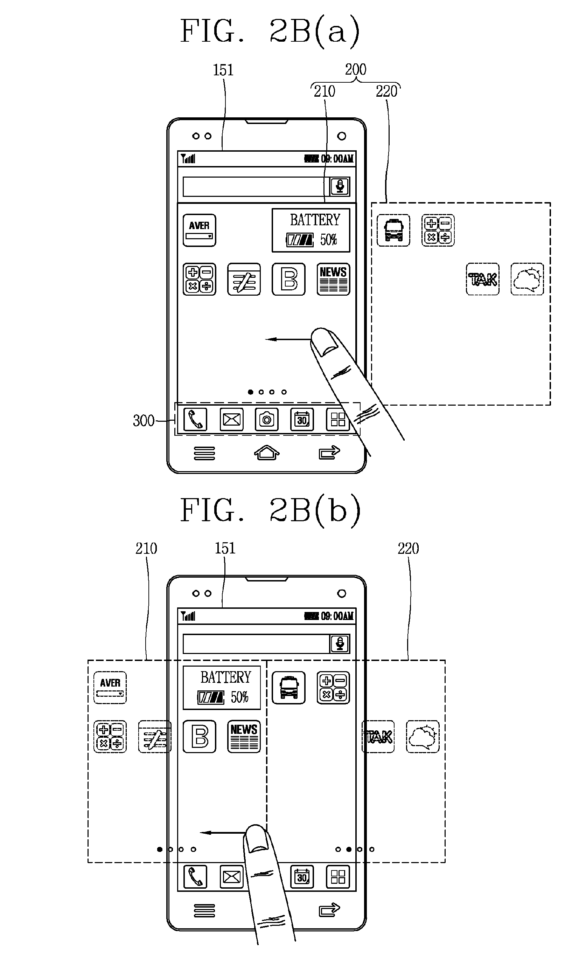

As illustrated in (b) of FIG. 2B, the plurality of home screen pages 210 and 220 may simultaneously be output on the display unit 151, in response to such touch gesture, or one of the plurality of home screen pages may be output on the display unit on which the touch gesture is released.

In more detail, based on an applied degree of a flicking or drag touch, a home screen page which is being output on the display unit 151 when the flicking or drag touch is applied may be moved. Here, when it is sensed that the flicking or drag touch has stopped at one point, the plurality of home screen pages 210 and 220 may simultaneously be output on the display unit 151.

The home screen pages, as illustrated in (b) of FIG. 2B, may be transparently displayed such that edges of the home screen pages displayed on the display unit 151 cannot be distinguished from each other.

That is, the controller 180, as illustrated in (b) of FIG. 2B, may display only objects (icons or widgets) included in the home screen page, without outputting a boundary surface of the home screen page.

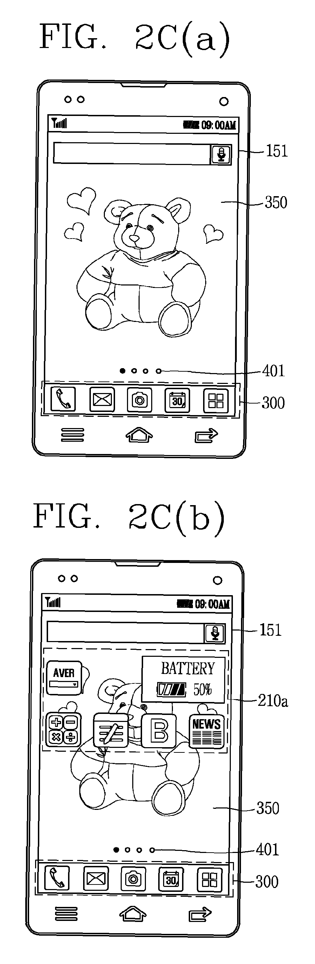

As illustrated in (a) of FIG. 2C, a background screen (or a background image) 350 may be output on the display unit 151 by a user selection or by a setting of the controller 180, and the controller 180 may control the display unit 151 to output the background screen 350 and the home screen page 210 in an overlapping manner.

The controller 180 may control the background image 350 output on the display unit 151 not to be switched when the home screen page 210 output on the display unit 151 is switched into another home screen page by the user selection.

In addition, the controller 180 may control the display unit 151 to display the home screen page in a transparent manner such that the background screen 350 can be viewed. Here, the objects (or the icons or widgets) included in the home screen page may opaquely displayed to be recognizable by the user.

As described above, one of a plurality of home screen pages may be output on the display unit of the mobile terminal. Also, a currently-output home screen page may be switched into another home screen page based on a touch gesture applied by the user.

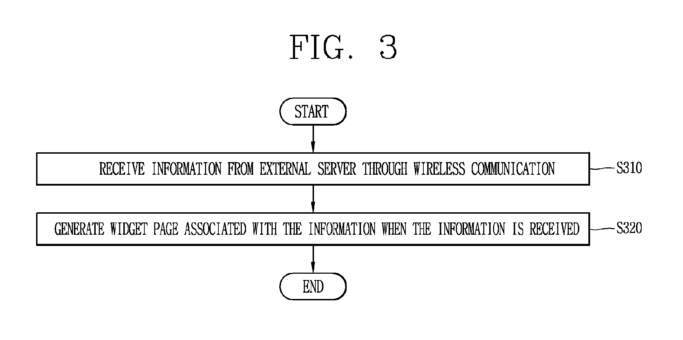

Hereinafter, a method of effectively providing information received from an external server will be described in more detail. FIG. 3 is a flowchart illustrating a method of providing information received from an external server in a mobile terminal in accordance with one exemplary embodiment disclosed herein.

In the mobile terminal according to the one exemplary embodiment, information may be received from an external server (S310).

The mobile terminal according to the one exemplary embodiment may receive information from an external server through wireless or wired communication. For example, the wireless or wired communication method may be a method of transmitting and receiving information through 3G, 4G and LTE communication networks as a generally used method.

The external server may be an information-transmittable external server. The external server may be accessible through communication. Hereinafter, the access of the mobile terminal to the external server may be understood as a state of enabling transmission and reception of information through communication with the external server.

The external server may further include a memory storing information therein. Also, the external server may be present in plurality. In more detail, the controller 180 may simultaneously access at least one external server. Here, each external server may be a server having a different Internet protocol (IP) address.

Here, the information stored in the external server may be information received from an external device or information generated by the server itself. For example, the external server may store information received from an external device through communication in the memory provided therein. Here, the external device may be a terminal, a computer and the like which can perform communication with the external server. As another example, the information stored in the external server may be information which is input through an input device directly connected to the external server.

Also, the information of the external server may be updated in real time. Here, updating information may refer to replacing information previously stored in the memory of the external server with new information or storing new information which has not been stored in the memory of the external server. Here, replacing the previous information with the new information may refer to deleting the previous information from an address of the memory, in which the previous information has been stored, and storing new information in the address of the memory. Also, the new information which has not been stored in the memory of the external server may be stored in a new address of the memory.

The controller 180 of the mobile terminal may receive information from the external server through communication with the external server. Here, a behavior that the mobile terminal receives information from the external server may be defined as "downloading information stored in the external server." Hereinafter, the term of receiving information from an external server and the term of downloading information from an external server may be used as the same meaning.

When a preset condition is met, the controller 180 may access the external server. In more detail, the controller 180 may access the external server when it receives a user command to access the external server, when it receives notification information notifying that the information has been updated from the external server, with a preset time interval or in real time.

While the mobile terminal accesses the external server, the controller 180 may receive at least part of information stored in the external server from the external server. Here, the at least part of the information may be information which meets a preset condition or is selected by the user.

Here, the condition may be preset by the user. Here, the user may preset the condition using a user interface for setting an information-related condition.

For example, the preset condition may correspond to a case where the information is information including a specific word set by a user, a case where an updated date of the information is after a preset date, or a case where the information is information updated in a preset external server.

As another example, while at least part of the information stored in the external server is output on the display unit 151, the controller 180 may receive information, which is selected by the user from the at least part information, from the external server.

When the information is received from the external server, the mobile terminal according to the one embodiment may generate a widget page associated with the received information (S320).

When the information is received from the external server, the controller 180 may control the display unit 151 to provide the received information to the user. Here, the controller 180 may generate a widget page associated with the information for providing the received information.

The widget page may be a newly-generated home screen page which is different from a plurality of preset home screen pages. That is, the widget page may be a home screen page including a graphic object associated with the received information.

Here, on the home screen pages may be displayed graphic objects indicating home screen pages preset in the mobile terminal. The graphic objects may be associated with the home screen pages, respectively. When one of the graphic objects is selected, a home screen page associated with the selected graphic object may be entered.

Here, when the widget page is generated, the controller 180 may output a graphic object associated with the widget page in the vicinity of a graphic object indicating a home screen page. Here, the graphic object associated with the widget page may have the same form as or a different form from the graphic object indicating the home screen page.

The widget page may be output as soon as being generated or output by a user selection. For example, when information is received from an external server, the controller 180 may generate a widget page and output the generated widget page on the display unit 151. As another example, when the widget page is generated, the controller 180 may output a graphic object indicating the widget page and output the widget page in response to the graphic object being selected.

Here, the information received from the external server may be displayed on the widget page. Here, when the information received from the external server is in plurality, an information list including items corresponding to the plurality of information, respectively, may be displayed in the form of widget. Here, the widget may refer to a graphic user interface through which brief information related to an application associated with the widget can be checked right on a home screen page, even without executing the application.

The user may also execute a function of the widget-associated application using the widget, even without executing the application. In more detail, when the widget is a widget including at least one information received from the external server, the controller 180 may control one of the at least one information not to be displayed on the widget page any more, in response to a preset touch input applied to the widget page.

While the widget page is displayed on the display unit 151, the controller 180 may control the widget page to be vanished from the display unit 151 in response to a preset touch input. Also, the controller 180 may control the display unit 151 to output one of the plurality of home screen pages.

Here, the controller 180 may release the setting of the widget page as the home screen page. That is, the controller 180 may control the widget page to disappear from the display unit 151 by releasing the setting as the home screen page outputtable on the display unit 151. Here, the controller 180 may also control the graphic object indicating the widget page to disappear from the display unit 151. By enabling the widget page to be temporarily output and then vanished, complexity of the display unit due to an increase in the number of home screen pages can be reduced.

Meanwhile, the present disclosure may separately generate a widget page including received information. Alternatively, the present disclosure may also generate a widget or icon associated with the received information to be output on one of a plurality of preset home screen pages.

Here, the controller 180 may set a home screen page for outputting a widget by a user selection, or select a home screen page for outputting the widget according to a preset condition. For example, the controller 180 may output the widget on a home screen page, on which a region for outputting the widget is ensured, among the plurality of home screen pages.

Hereinafter, the case of generating the widget page will be described, but the present disclosure may not be limited to this. The present disclosure may also be applied similarly to a case of generating a widget and outputting the generated widget on one home screen page.

Also, when the icon is output, the controller 180 may display a widget associated with the received information, in response to a preset touch input applied to the icon.

Here, the icon may include various types of visual information related to the received information. For example, the icon may be provided with an animation effect, like flickering, to visually notify that the information is currently received, or may include guide information for notifying that a widget can be output.

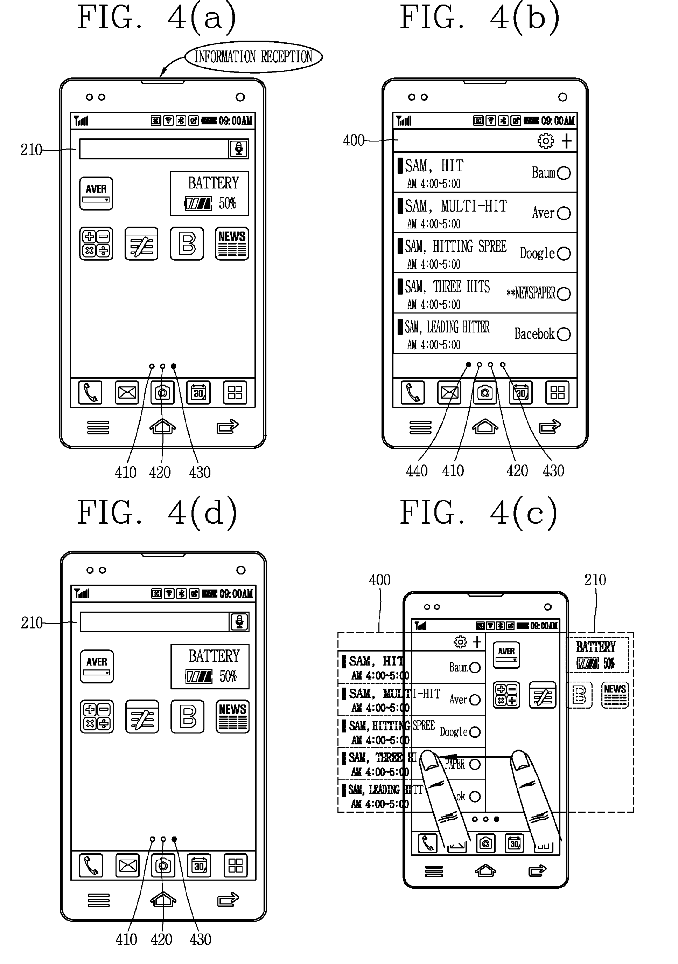

Hereinafter, the generation of the widget page will be described in more detail with reference to FIG. 4(a) to 4(d).

The mobile terminal according to the one embodiment disclosed herein may receive information from an external server. The external server may be preset as a server which can communicate with the mobile terminal. In more detail, information related to an IP address of each external server, or the like, is stored in the memory 170 of the mobile terminal. Also, the controller 180 may access the IP address through communication.

The information may be received by the mobile terminal when a preset condition is met, regardless of a state of the mobile terminal, or by a user selection. For example, the information may be received from the external server when the mobile terminal is in a standby state. The standby state may refer to a state in which functions executable in the mobile terminal can be executed. Also, the standby state may be construed as the same meaning as an idle state.

When the mobile terminal is in the idle state, one of a plurality of home screen pages may be output on the display unit 151. For example, as illustrated in (a) of FIG. 4, when the mobile terminal is in the idle state, one home screen page 210 may be output on the display unit 151.

Here, when the information is received from the external server, the controller 180 may generate a widget page 400 associated with the received information. When the widget page 400 is generated, the controller 180 may set the widget page 400 to a home screen page. Here, the number of preset home screen pages may increase in response to the widget page 400 being set to the home screen page.

On the widget page may be included widgets indicating the received information, and graphic objects.

When the widget page is generated, the controller 180 may display the widget page on the display unit 151. For example, as illustrated in (b) of FIG. 4, the widget page 400 may be output on the display unit 151. Also, when the widget page 400 is generated, graphic objects 410, 420 and 430 indicating the plurality of home screen pages, respectively, may be output on the display unit 151 and also a graphic object 440 indicating the widget page 400 may be output on the display unit 151 in the vicinity of the graphic objects 410, 420 and 430. This may allow the user to check the received information through the widget page 400.

A widget associated with the received information may be included on the widget page 400. That is, the widget may be output on the widget page 400. The widget may indicate the received information. Here, the user may perform a function associated with the information in response to a touch input applied to the widget. Here, the information-related function may be a function of outputting the information on the display unit 151, a function of vanishing the information from the widget, and the like.

When a preset touch input is applied to the widget page, the controller 180 may control the widget page 400 to be vanished from the display unit 151. In addition to this, the controller 180 may display one of the plurality of home screen pages on the display unit 151. In other words, when a preset touch input is applied to the widget page 400, the widget page 400 may be switched into one home screen page 210. Here, the preset touch input may be a combination of at least one of a drag touch, a long touch and a flicking touch. For example, after a long touch is applied to the widget page 400, a flicking touch which extends from the long touch in an upward or downward may be applied.

For example, as illustrated in (c) of FIG. 4, when a drag input is applied to the widget page 400, the controller 180 may move the widget page 400 along the drag input. During the movement of the widget page 400, the controller 180 may output at least part of the one home screen page 210 on the display unit 151 as wide as an area corresponding to a moved length of the widget page 400. When the drag input is stopped, the controller 180 may display the one home screen page 210 on the display unit 151.

Although not illustrated, on one region of the widget page may further be output a graphic object which indicates a function of vanishing the widget page 400 from the display unit 151. Here, when the graphic object is selected, the controller 180 may control the widget page to be vanished from the display unit 151.

When the widget page 400 is vanished from the display unit 151, the controller 180 may release the setting of the widget page 400 as the home screen page. Here, when the setting of the widget page 400 as the home screen page is released, the user may not be able to view the widget page 400 through the movement on the home screen page.

That is, in order to reduce complexity due to the increased number of home screen pages, when information is received, a widget page may temporarily output and then vanished. Accordingly, the user may conveniently check information received from an external server, without an increase in complexity of the home screen pages.

Meanwhile, when the setting of the widget page 400 as the home screen page is released, the controller 180 may output an icon associated with the widget page 400 on one home screen page, except for the widget page 400.

The icon associated with the widget page 400 may be linked to at least one function of outputting the widget page 400. Here, a different function may be activated according to a type of touch input applied to the icon associated with the widget page 400. For example, when a short touch is applied to the icon associated with the widget page 400, a function of outputting information included in the widget page 400 may be carried out. When a long touch is applied to the icon associated with the widget page 400, a function of outputting the widget page 400 on the home screen page may be carried out.

Meanwhile, the foregoing description has been given of the case where the widget page 400 is output and thereafter vanished. However, the widget page 400 may also be kept set as one of home screen pages, instead of disappearing. In this case, the user can always view the widget page 400 as one of the home screen pages.

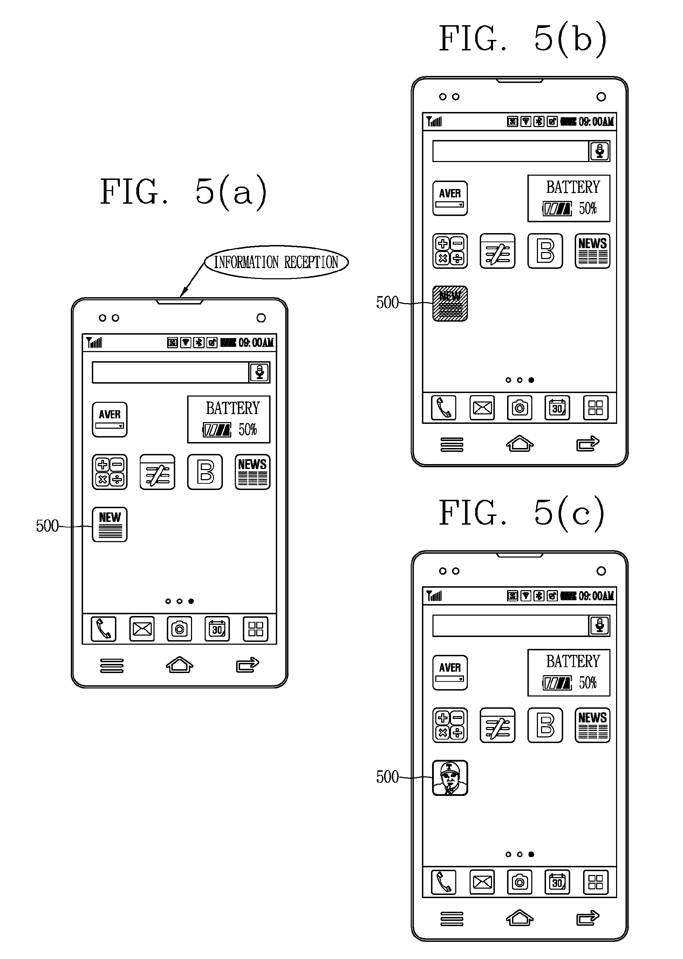

The foregoing description has been given of the method of providing the information received from the external server. Hereinafter, description will be given in more detail of a method of notifying to a user that the information has been received, other than providing the received information immediately to the user, when the information is received from the external server, with reference to the accompanying drawing. FIGS. 5(a) to 5(c) are conceptual views illustrating a method of notifying that information has been received from an external server, in a mobile terminal according to one embodiment disclosed herein.

When information is received from an external server, the controller 180 may notify it to a user. The notifying method may be at least one of visible, audible and tactile methods. For example, when the information is received from the external server, the controller 180 may output a notification sound through a speaker, or provide notification information in a vibrating manner.

Also, as aforementioned, the controller 180 may instantly output a widget page associated with the received information, or output an icon 500 associated with the received information without instantly outputting the widget page.

In more detail, when the information is received from the external server, the controller 180 may output the icon 500 associated with the received information on one of a plurality of home screen pages.

The icon 500 may be an icon associated with an output of the widget page. Here, the icon 500 may be output in response to the reception of the information from the external server, or output when the widget page is vanished from the display unit 151.

In more detail, when the icon 500 is selected, the controller 180 may enter the widget page 400 including the received information or output a widget associated with the received information on the display unit 151.

Here, in order to notify the user of the reception of the information from the external server, the controller 180 may change a shape and a color of the icon 500. For example, as illustrated in FIG. 5, the controller 180 may change at least one of the shape and the color of the icon 500 associated with the reception of the information.

As one example related to the change in the shape of the icon 500, as illustrated in (b) of FIG. 5, the controller 180 may change the color of the icon 500. Or, as illustrated in (c) of FIG. 5, the controller 180 may change the icon 500 into a graphic object associated with the received information.

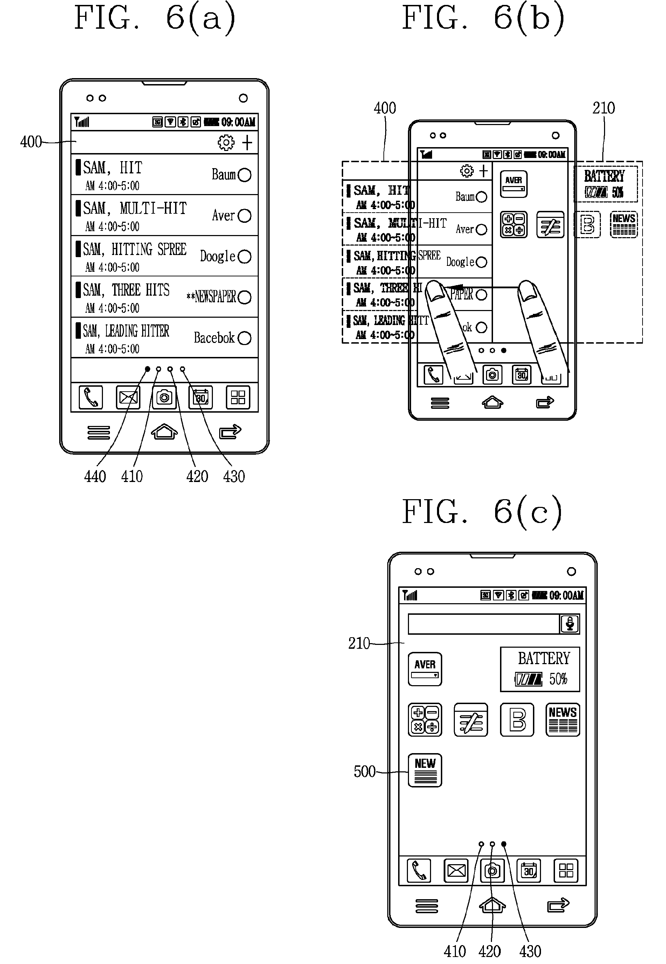

This may allow the user to be notified of the reception of the information from the external server. The foregoing description has been given of the method of notifying the reception of the information. Hereinafter, description will be given of a method of notifying a presence of the widget page when the widget page is vanished. FIGS. 6(a) to 6(c) are conceptual views illustrating a control method after the widget page is vanished in a mobile terminal according to one exemplary embodiment disclosed herein.

While the widget page 400 is output on the display unit 151, when a preset touch input is applied to the widget page 400, the controller 180 may not output the widget page 400 any more. Here, one home screen page 210, instead of the widget page 400, may be output on the display unit 151.

Meanwhile, in order to prevent a situation in which the user is unable to view the widget page again due to the widget page 400 being temporarily output and then vanished, the controller 180 may generate the icon 500 associated with the widget page 400 after the widget page 400 is vanished.

Here, the icon 500 may be an icon associated with a function of outputting the widget page 400. Also, the icon 500 may be output on one of a plurality of preset home screen pages. For example, as illustrated in (c) of FIG. 6, the icon 500 may be output on one region of the one home screen page 210.

Also, the icon 500 may be output on a home screen page, which has a region for outputting the icon 500, of the plurality of home screen pages. For example, when other icons output have already occupied an entire region of a home screen page, the controller 180 may detect another home screen page having a region with no icon output thereon, and output the corresponding icon 500 on the detected home screen page.

Accordingly, even after the widget page 400 disappears, the user can be aware of the presence of the widget page 400 by virtue of the icon 500.

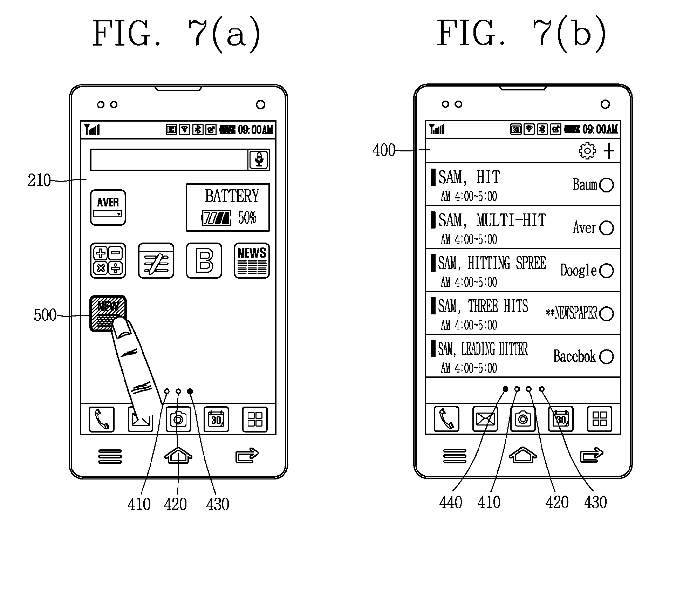

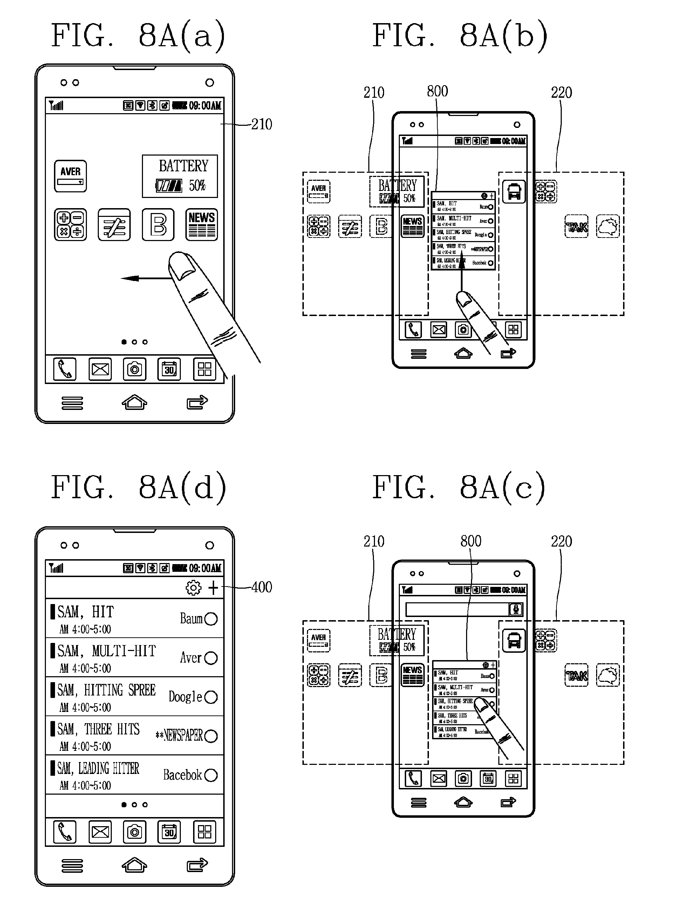

Hereinafter, description will be given of a method of outputting the widget page on the display unit 151 again after the widget page is vanished from the display unit 151. FIGS. 7(a) to 7(b), 8A(a) to (d) and 8B(a) to 8B(b) are conceptual views illustrating a method of re-outputting a widget page.

When information is received from an external server, the controller 180 may generate a widget page 400. After the generated widget page 400 is output on the display unit 151, when a preset touch input is applied, the controller 180 may control the widget page 400 to be vanished from the display unit 151. Also, after the widget page 400 is output on the display unit 151, the controller 180 may release the setting of the widget page 400 as a home screen page. That is, the controller 180 may control the widget page 400 to be temporarily output.

Also, the present disclosure may provide a method by which the user outputs the widget page 400 again after the widget page 400 is vanished. In more detail, the controller 180 may output a graphic object which allows for entrance into the widget page 400.

For example, as illustrated in (a) of FIG. 7, after the widget page 400 is vanished, the controller 180 may output an icon 500 associated with the widget page 400 on one home screen page 210. Here, as illustrated in (b) of FIG. 7, when the icon 500 is selected, the controller 180 may output the widget page 400 back on the display unit 151.

As another example, the controller 180 may output a graphic object associated with the widget page 400 in response to a preset touch input. In more detail, the controller 180 may output the graphic object associated with the widget page 400 while one home screen page 210 of a plurality of home screen pages is switched into another home screen page 220. That is, while at least two home screen pages are output on the display unit 151, the controller 180 may output the graphic object associated with the widget page 400 between output regions of the at least two home screen pages.

For example, as illustrated in FIG. 8A, the controller 180 may output a thumbnail image 800 indicating the widget page 400, while the one home screen page 210 is switched into the another home screen page 220 in response to a preset touch input. Here, the preset touch input may be a drag input, a pinch-in or pinch-out input and the like, which have a specific direction.

In more detail, when a drag input is applied to the one home screen page 210, the controller 180 may switch the one home screen page 210 into the another home screen page 220. Here, while the one home screen page 210 is switched into the another home screen page 220, when a preset time elapses in a state that the drag input is paused (held), the thumbnail image 800 indicating the widget page 400 may be output between the one home screen page 210 and the another home screen page 220. Here, the lapse of the preset time in the state that the drag input is paused may be referred to as 'drag and hold operation.' Hereinafter, the drag and hold operation explained hereinafter refers to an operation that a preset time elapses in a state that a drag touch is held while it is applied. The term may be variable.

Here, when a preset touch input is applied to the thumbnail image 800, the controller 180 may output the widget page 400 on the display unit 151. In more detail, as illustrated in (b) of FIG. 8A, the controller 180 may apply a touch input, which extends from the drag input applied for the switching between the home screen pages, to the thumbnail image. Here, as illustrated in (c) of FIG. 8A, the controller 180 may output the widget page 400 on the display unit 151 in response to the touch input applied.

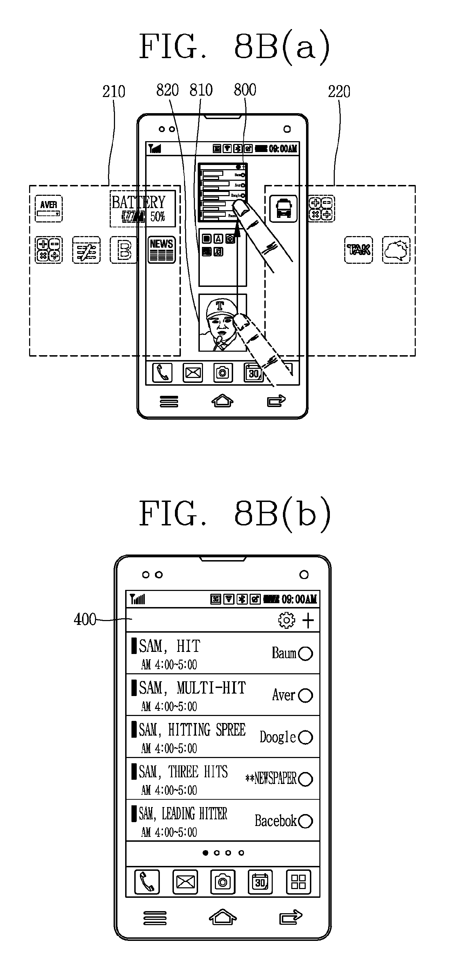

Meanwhile, when the widget page is in plurality, the controller 180 may output a plurality of thumbnail images 800, 810 and 820 corresponding to the plurality of widget pages, respectively. For example, as illustrated in (a) of FIG. 8B, when the drag and hold operation is sensed while the one home screen page 210 is switched into the another home screen page 220, the controller 180 may output the plurality of thumbnail images 800, 810 and 820.

Sizes of the plurality of thumbnail images 800, 810 and 820 may be preset or depend on the number of widget pages. For example, when the number of widget pages increases, the size of each of the plurality of thumbnail images may be reduced. On the other hand, when the number of widget pages is reduced, the size of each of the plurality of thumbnail images may increase.

When one thumbnail image 800 is selected from the plurality of thumbnail images 800, 810 and 820, the controller 180 may output a widget page indicated by the selected thumbnail image 800 on the display unit 151. For example, as illustrated in (a) and (b) of FIG. 8B, when the user releases a touch input extending (continued) from the drag input on a desired thumbnail image 800, a widget page indicated by the desired thumbnail image 800 displayed on the touch-released region may be output on the display unit 151.

Accordingly, the present disclosure may re-provide the vanished widget page on the display unit 151. Also, the present disclosure may output the widget page without the increase in the home screen pages, thereby reducing complexity.

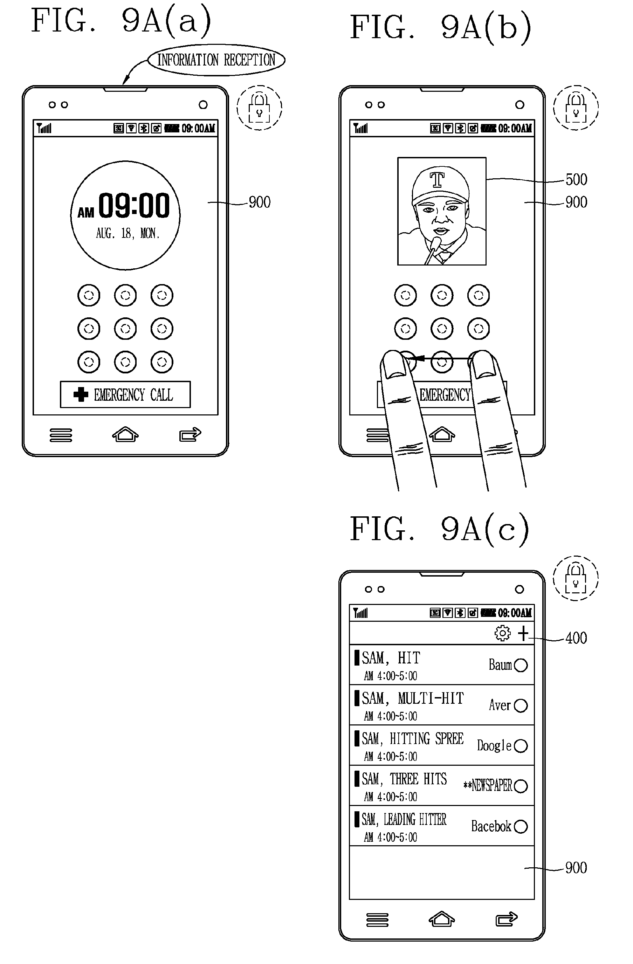

So far, the method of re-outputting the vanished widget page has been illustrated. Hereinafter, a method of outputting the widget page on a lock screen will be described. FIGS. 9A(a) to 9A(c), 9B(a) to 9B(b) and 10(a) to 10(b) are conceptual views illustrating a method of providing a widget page on a lock screen.

The mobile terminal according to the one exemplary embodiment may be in a lock state of restricting a reception of a user's control command. When the mobile terminal is in the lock state, a lock screen 900 indicating the lock state may be output on the display unit 151. The lock screen may include a graphic object for switching the lock state into an unlock state, a graphic object indicating an emergency call function, a graphic object indicating time information and the like. That is, the lock state is a state of permitting extremely less functions with locking most of functions of the mobile terminal.

The mobile terminal may receive information from an external server in the lock state. Here, the controller 180 may output a graphic object 500 indicating the received information on the lock screen 900.

Here, the controller 180 may output the graphic object 500 indicating the received information, with maintaining the lock state. That is, the present disclosure may provide a method of fast checking the information received from the external server even without switching the lock state into the unlock state.

Meanwhile, the lock screen 900 may be provided in plurality. That is, the lock screen 900 displayed in the lock state may be implemented in the same form as the home screen page. Here, the controller 180 may set a widget page indicating the information received from the external server as the lock screen 900.

Also, the lock screen 900 and the widget page may be switchable with each other, equal to the home screen page. Here, the widget page may be located at a position left or right of the lock screen 900.

Here, the graphic object 500 may be output on a region corresponding to a preset position on the lock screen. In more detail, when a widget page is generated at a left side of the lock screen 900, the graphic object 500 may be output on a left region of the lock screen 900. Also, when the widget page is generated at a right side of the lock screen 900, the graphic object 500 may be output on a right region of the lock screen 900. This may allow the user to know the generated position of the widget page on the lock screen 900.

Here, while the graphic object indicating the received information is output on the lock screen 900, the controller 180 may output the widget page 400 indicating the received information on the display unit 151 in response to a preset touch input. Here, the preset touch input may be a long touch applied to the graphic object 500 indicating the received information, or a drag input applied on the lock screen 900 in a specific direction. Here, the widget page 400 may be generated in response to the reception of the information, and output directly on the display unit 151 in the lock state.

For example, as illustrated in (c) of FIG. 9A, the widget page 400 may be output directly on the lock screen 900 in the lock state. This may allow the user to fast check the widget page 400 in the lock state.

In such a manner, the present disclosure may provide the method of fast checking the information without releasing the lock state. Also, the present disclosure may allow the widget page to be vanished after being checked, thereby providing various types of information, which may result in reduction of complexity of the display unit 151.

The present disclosure may also provide a method of checking previously received information in the lock state even though information is not received from the external server.

When a preset touch input is applied to the lock screen, the controller 180 may output the widget page 400 associated with the information received from the external server on the lock screen. Here, the preset touch input may be a drag input starting from a specific region of the lock screen, a drag input starting from the specific region and extending in a preset direction, a long touch input and the like.

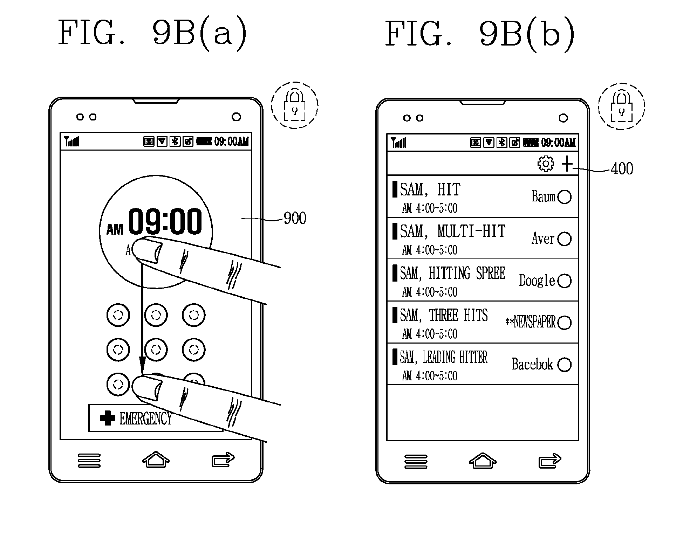

For example, as illustrated in (a) of FIG. 9B, when a drag input starting from a specific region and extending in the gravity direction is applied, the widget page 400 may be output on the lock screen 900.

Accordingly, the present disclosure may provide a method by which the user can instantly check information in the lock state, even without a separate procedure of switching the lock state into the unlock state.

Also, the widget page 400 may be vanished from the display unit 151 in response to a preset touch input. Here, the controller 180 may output the lock screen 900 indicating the lock state back on the display unit 151. Here, the controller 180 may set the widget page 400 not to be output in response to a preset touch input in the lock state.

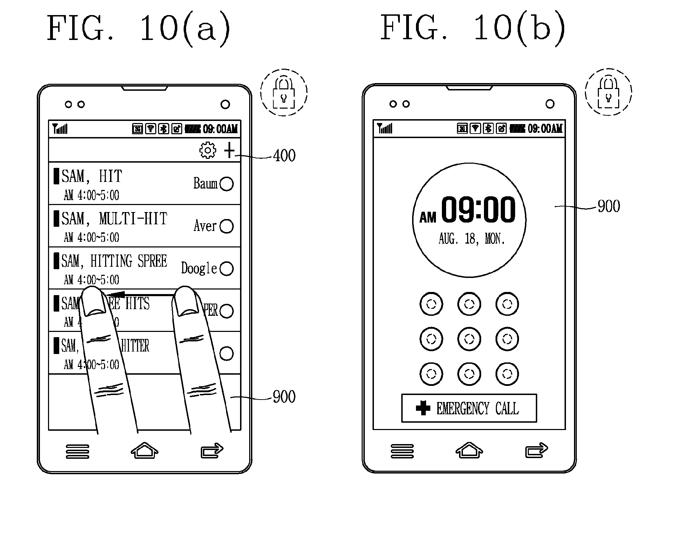

For example, as illustrated in FIG. 10, while the widget page 400 is output on the lock screen 900, when a drag input is applied in a preset direction, the widget page 400 may be vanished from the lock screen 900. Here, the controller 180 may set the lock screen 900 to be output and the widget page 400 not to be output.

The widget page 400 may also be set to be continuously output in the lock state. Whether to allow the widget page to be kept output or to be vanished may be preset or decided by a user selection.

That is, according to the present disclosure, the widget page may be allowed to be temporarily output on the lock screen and then vanished, thereby enabling easy checking and simultaneous providing of a simplified UI.

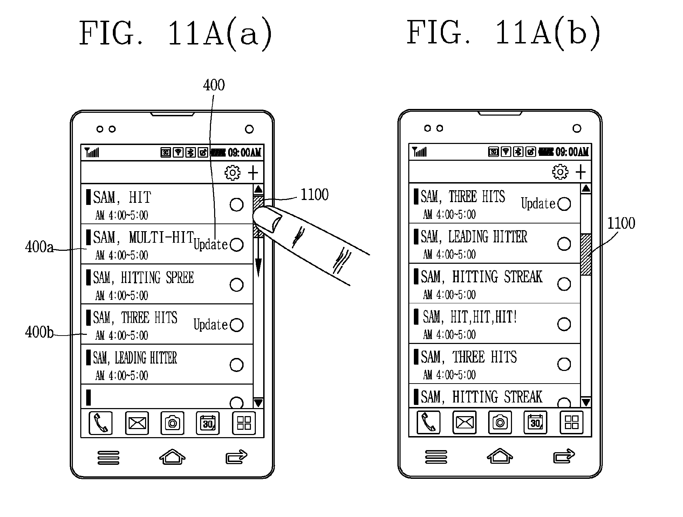

So far, the method of generating and displaying the widget page has been illustrated. Hereinafter, a method of checking received information using the widget page will be described in more detail. FIGS. 11 A(a) to 11 A(b), 11 B(a) to 11 B(b) and 11C(a) to 11 C(c) are conceptual views illustrating a method of checking information included on a widget page through the widget page.

The widget page 400 may include information received from an external server. For example, as illustrated in (a) of FIG. 11A, the information received from the external server may be output on the widget page 400. In more detail, when there are a plurality of information received from the external server, an information list including items indicating the plurality of information, respectively, may be displayed on the widget page 400.

The information included on the widget page may be the information received from the external server, namely, information meeting a preset condition. For example, when a keyword set by the user is "baseball," the information may be several information including details related to the baseball. As illustrated in (a) of FIG. 11A, such information related to the preset keyword may be output on the widget page 400.

Here, the controller 180 may display user-unchecked information of the plurality of information included on the widget page in a visually distinguishing manner. Here, the user-unchecked information may be information received from the external server before the widget page 400 is output on the display unit 151. For example, as illustrated in (a) of FIG. 11A, items 400a and 400b indicated with "update," among the plurality of information, may be pieces of information which have recently been received from the external server but not checked yet by the user. Accordingly, the user can fast recognize the unchecked information.

Also, when the widget page 400 is greater than an output region of the display unit 151, the controller 180 may scroll the widget page 400 so as to check the rest of the widget page obscured. For example, as illustrated in (a) of FIG. 11A, a graphic object 1100 which performs a scroll function may be output on the widget page 400. Here, the controller 180 may scroll the widget page 400 in response to a touch input applied to the graphic object 1100 performing the scroll function.

Here, when the widget page 400 is scrolled, at least partial information which has not been output before the widget page 400 is scrolled may be visible on the display unit 151. For example, as illustrated in (b) of FIG. 11A, information which has not been output prior to the widget page 400 being scrolled, among those information output on the widget page 400, may be displayed on the display unit 151.

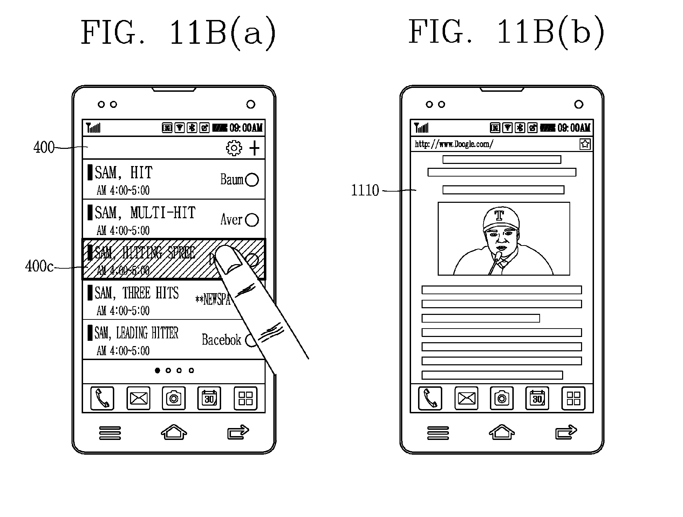

Also, when one of a plurality of items indicating information output on the widget page 400 is selected, the controller 180 may output information indicated by the selected item on the display unit 151. For example, as illustrated in (a) of FIG. 11B, when one item 400c is selected, the controller 180 may output information 1110 indicated by the one item 400c on the display unit 151. In more detail, the controller 180 may access a URL address linked to the information indicated by the one item 400c, to display the information on the display unit 151.

The controller 180 may also perform various functions associated with the information, in response to a preset touch input applied to the widget page 400. For example, the controller 180 may perform a function of deleting the information on the widget page 400, a function of storing the information in a bookmark and the like.

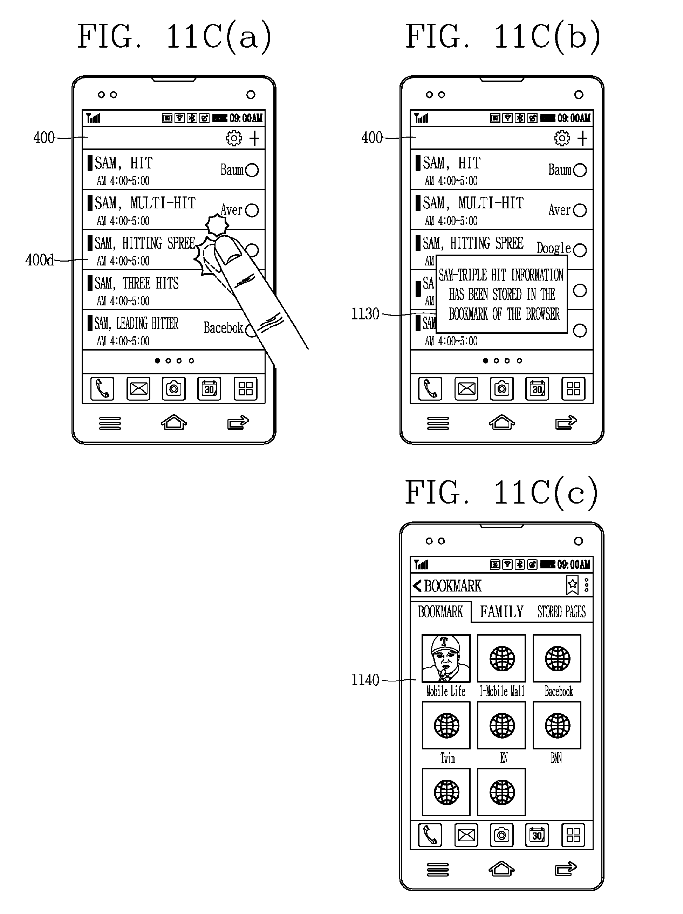

For example, as illustrated in FIG. 11C, the controller 180 may store a URL address linked to information indicated by one item 400d in a bookmark, in response to a preset touch input applied to the one item 400d of a plurality of items output on the widget page 400. Here, the preset touch input may be various types of touch inputs, for example, a drag input applied from right to left.

The function of storing the information in the bookmark may be a function of storing a URL address, which is an address in which the information is stored in the external server, in the memory 170. Here, the controller 180 may be provided immediately with the information using the URL address stored in the bookmark.

Once the URL address is stored in the bookmark, as illustrated in (b) of FIG. 11C, the controller 180 may output notification information 1130 notifying that the URL address of the information indicated by the one item 400d has been stored in the bookmark. This may allow the user to recognize the storage of the URL address.

Here, as illustrated in (c) of FIG. 11C, the controller 180 may display on the display unit 151 screen information related to the bookmark, including a graphic object 1140, which indicates the URL address linked to the information indicated by the one item 400d.

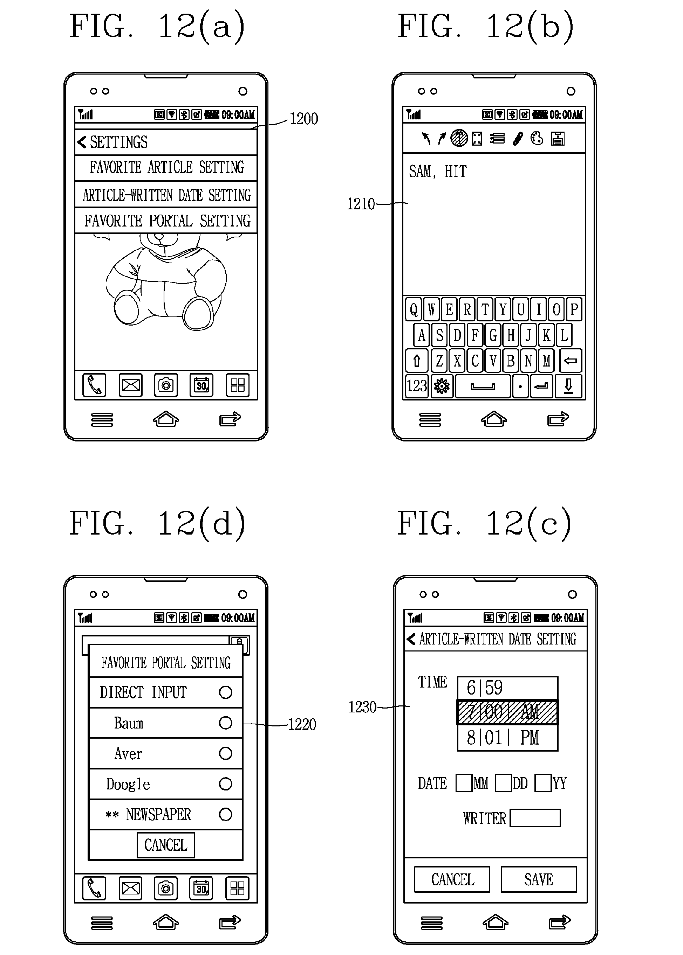

So far, the method of performing the function associated information on the widget page has been described. Hereinafter, description will be given of a method of setting a condition related to information received from an external server. FIGS. 12(a) to (d) are conceptual views illustrating a method of setting a condition related to information received from an external server.

The mobile terminal according to the one embodiment may perform transmission and reception of information with an external server through communication. Here, the information from the external server may be received in the mobile terminal by a user selection or according to a preset condition.

Here, the present disclosure may provide a user interface for setting the preset condition associated with the information received from the external server. In more detail, the user interface may provide an environment allowing for an input of a specific word, a specific date, a specific time, an IP address of a specific external server.

For example, as illustrated in (a) of FIG. 12, the controller 180 may output on the display unit 151 a user interface, which includes items for allowing an input of the specific word, the specific date, the specific time, the IP address of the specific external server and the like.

Here, the item allowing the input of the specific word corresponds to a function for receiving information including the specific word from the external server in a searching manner. Also, the item allowing the input of the specific date corresponds to a function for receiving information related to the specific date from the external server. Also, the item allowing the input of the IP address of the specific external server corresponds to a function for receiving information by accessing the external server having the IP address of a plurality of external server.

The user may select each item and directly input a desired condition. For example, as illustrated in (b) of FIG. 12, when a word "Sam, hit" is input through an interface 1210 for allowing an input of a specific word, the controller 180 may search for articles, images, videos and the like, in association with the word "Sam, hit" from the external server and receive the searched results in the mobile terminal.

As another example, as illustrated in (c) o FIG. 12, when "7 am" is input through an interface 1220 for allowing an input of a specific time, the controller 180 may receive information, which has been generated after "7 am," from the external server.

As another example, as illustrated in (d) of FIG. 12, when "Baum" server is input through an interface 1230 for allowing an input of a specific external server, the controller 180 may access "Baum" server and receive at least one information from the "Baum" server.

Also, the controller 180 may receive information which meets at least two of those conditions. For example, when the conditions "Sam, hit" and "7 am" are input, the controller 180 may receive information, which includes "Sam, hit" and has been generated after "7 am."

Accordingly, the user may automatically download desired information by use of a preset condition. The user may also be conveniently provided with information without a direct search from an external server.

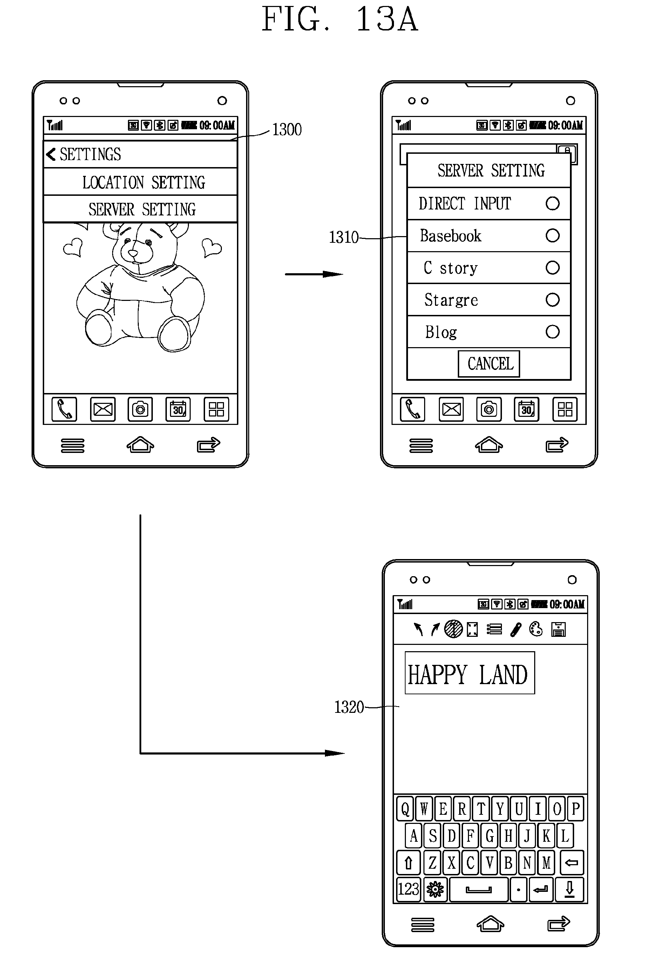

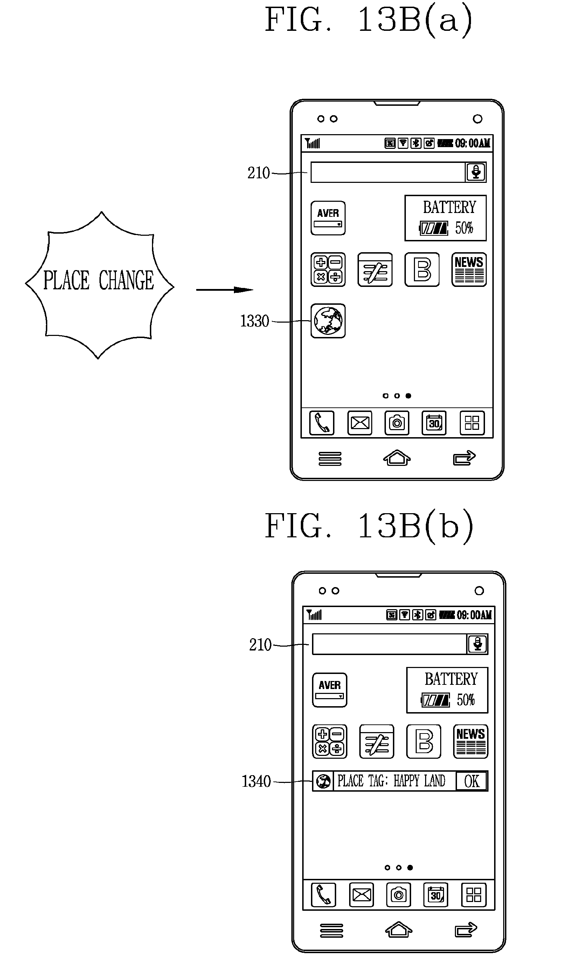

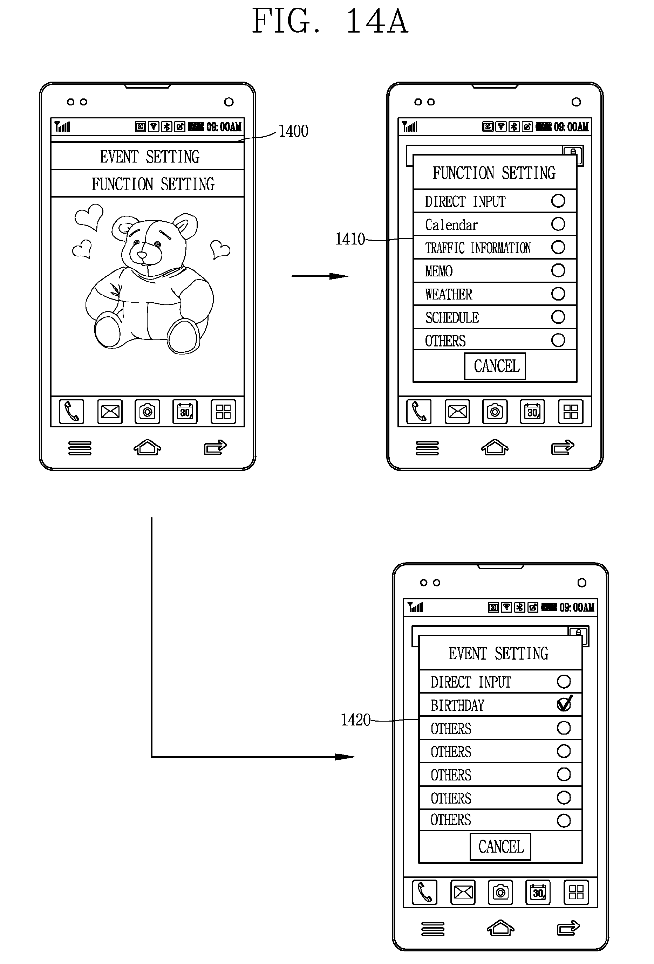

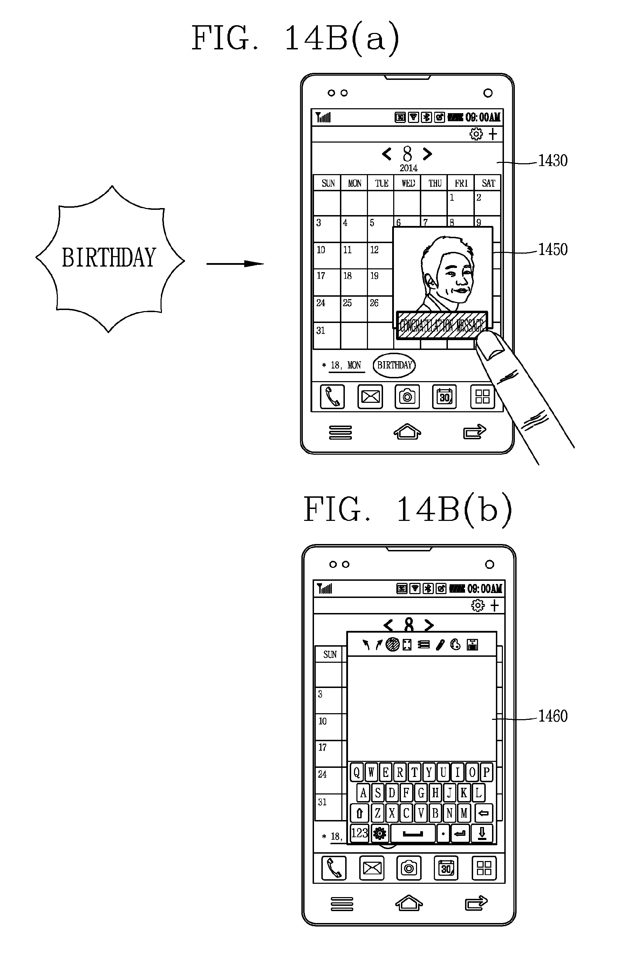

So far, the information received from the external server has been described. Hereinafter, various embodiments using a widget page will be described. FIGS. 13A, 13B(a) to 13B(b), 13C(a) to 13C(c) and FIGS. 14A and 14B(a) to 14B(b) are conceptual views illustrating various embodiments using a widget page.

The mobile terminal according to the one embodiment may generate a widget or widget page associated with an event, which meets a preset condition, and provide the generated widget or widget page to a user when the event is generated.

In more detail, when an event meeting a preset condition is generated on the mobile terminal, the controller 180 may output a widget or widget page which is capable of performing a function linked to the event on the display unit 151.

Here, the condition may be preset by a user. For example, the preset condition may correspond to a recognition of a specific place, a specific date, a generation of a call event received from a specific user, a specific time, a storage of a new image in the memory, and the like.

To this end, the present disclosure may provide a user interface for allowing the user to set (input) the preset condition. For example, as illustrated in FIG. 13A, a user interface for setting a specific place may be provided.

When the specific place is set (input), the controller 180 may sense an arrival at the specific place when the user arrives at the specific place. More concretely, the controller 180 may sense a specific location through a location receiving unit (for example, GPS).

When the specific location is sensed, the controller 180 may output a widget associated with the specific location on one home screen page 210. Here, the one home screen page 210 may be a currently-output home screen page on the display unit 151 or a preset home screen page.

The home screen page 210 may also be a home screen page on which an icon 1330 associated with the specific location is output. For example, as illustrated in (a) of FIG. 13B, the icon 1330 associated with the location information may be output on the home screen page 210.

Here, the controller 130 may generate a widget for performing a function using the specific location. Here, the function using the specific location may be a road search function, a place tag function, a recommending function for applications which are frequently used at a specific place. The place tag function may be a function of providing information related to a place to an external server, such as a social networking service (SNS) server, or the like.

For example, as illustrated in (b) of FIG. 13B, the controller 180 may output a widget 1340 associated with the place tag function on one home screen page 210.

Here, the controller 180 may switch the icon 1330 into the widget 1340. That is, when a specific place is sensed, the controller 180 may change the icon 1330 into the widget 1340 and provide the changed widget 1340 to the user. Also, the controller 180 may output the generated widget 1340 directly, without changing or switching the widget 1340.

Here, the widget 1340 may be linked to a function of providing information related to a place to an external server, such as an SNS server, etc. Here, the controller 180 may transmit information related with the specific place to the external server, such as the SNS server, etc., through the widget 1340. Accordingly, the present disclosure may provide a method for allowing the user to more conveniently use the specific place information through the widget 1340. In addition, the widget 1340 may be switched back into the icon 1330 after the place-related information is transmitted to the external server, such as the SNS server.

The widget 1340 may continuously be output on the display unit 151 or be vanished from the display unit 151 when a preset condition is met. For example, the preset condition may correspond to sensing of a change in the specific place, a lapse of a preset time, sensing of a preset touch input, performing of the widget-associated function, and the like.

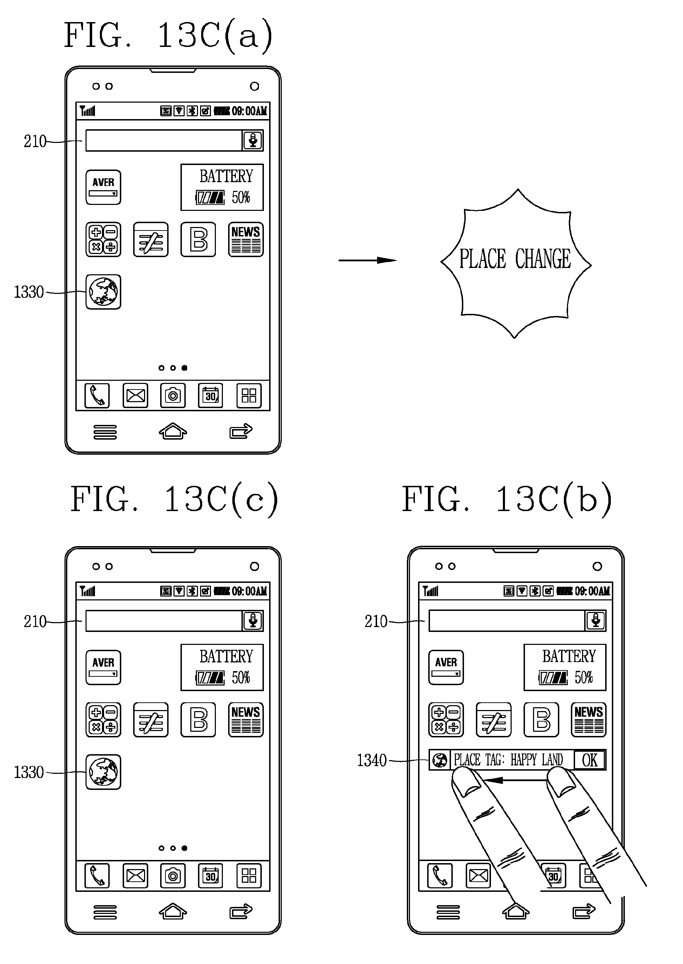

For example, as illustrated in (b) of FIG. 13C, when a preset touch input applied to the widget 1340 is sensed, the controller 180 may control the widget 1340 to be vanished. Here, the preset touch input may be a flicking touch input applied to the widget 1340.

After the widget 1340 disappears, the controller 180 may leave a region, on which the widget 1340 has been output, empty or output the icon 1330 again on the corresponding region. For example, as illustrated in (c) of FIG. 13C, the widget 1340 may be switched into the icon 1330 associated with the specific position. Whether or not the icon 1330 is to be output again may be selected by the user or preset at the fabrication process of the mobile terminal.

As another example, as illustrated in FIG. 14A, event information related to a specific date may be received from a user. For example, a birthday event of a specific person may be generated at a specific date.

Here, the controller 180 may store information related to the specific person by linking to the specific date. For example, a phone number, an email address and the like, associated with the specific person may be stored along with the specific date.

Afterwards, for the specific date, the controller 180 may generate a widget page or widget for performing a function linked to the specific person at the specific date. For example, as illustrated in (a) of FIG. 14B, the controller 180 may output a widget 1450 for performing a function of sending a message to the specific person at the specific date on a widget page 1430.

The widget page 1430 may include information related to the date, and additionally include the widget 1450. Here, the widget page 1430, similar to the aforementioned widget page, may be temporarily output and then vanished by the user.

When the widget 1450 is selected, the controller 180 may provide a user interface 1460 for sending a message to the specific person. That is, the present disclosure may allow for sending the message to the specific person, even without a separate procedure.

Although not illustrated, the present disclosure may provide a function linked to an SNS through a widget or widget page according to a preset condition.

In more detail, when a new content is stored in the memory 170 of the mobile terminal, the controller 180 may recognize it and output a widget or widget page for sending the stored content directly to a preset SNS server on the display unit 151. Here, the content is information transmittable to the SNS server, and may be a still image, a video, an URL address and the like. That is, the present disclosure may provide the user with the function of simply sending the content through the widget or widget page without an accessing procedure to the SNS server.

The present disclosure may allow the user to view information received from an external server directly on a home screen page, so as to provide such information without a separate procedure.

Also, the information may be vanished from the home screen page after being provided to the user, thereby reducing complexity of the display unit caused due to an output of excessive information.

Also, when an event meeting a preset condition is generated, a function linked to the event may be conveniently provided through a home screen page.

Further, the present disclosure can be implemented as computer-readable codes in a program-recorded medium. The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the controller 180 of the mobile terminal. Therefore, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal comprising:
a touch screen(151);
a wireless communication unit(110); and
a controller(180) configured to:
cause the wireless communication unit(110) to receive information from an external device;
cause the touch screen(151) to display one of a plurality of home screen pages; and
generate a widget page in response to the received information, the widget page being a home screen page that is newly generated in addition to the plurality of home screen pages.

2. The mobile terminal of claim 1, wherein the controller(180) is further configured to release a setting of the widget page as the home screen page in response to a preset touch input received while the widget page is displayed on the touch screen(151).

3. The mobile terminal of claim 2, wherein the controller(180) is further configured to cause the touch screen(151) to:
display graphic objects at a predefined location of the touch screen(151), each of the graphic objects corresponding to one of the plurality of home screen pages or the widget page; and
stop displaying a graphic object corresponding to the widget page in response to a preset control command received while the widget page is displayed on the touch screen(151).

4. The mobile terminal of claim 2, wherein the controller(180) is further configured to cause the touch screen(151) to:
display an icon associated with the widget page on one of the plurality of home screen pages in response to the releasing of the setting of the widget page as the home screen page; and
display the widget page in response to selection of the icon.

5. The mobile terminal of claim 2, wherein the controller(180) is further configured to cause the touch screen(151) to display a thumbnail image indicating the widget page between at least two home screen pages of the plurality of home screen pages when the at least two home screen pages are at least partially displayed together on the touch screen(151).

6. The mobile terminal of claim 5, wherein the controller(180) is further configured to cause the touch screen(151) to display the widget page in response to a preset touch input applied to the thumbnail image.

7. The mobile terminal of claim 5, wherein the controller(180) is further configured to cause the touch screen(151) to:
display a plurality of thumbnail images when a plurality of widget pages are generated, each of the plurality of thumbnail images corresponding to one of the plurality of widget pages; and
display a widget page corresponding to one of the plurality of thumbnail images in response to a preset touch input applied to the one of the plurality of thumbnail images.

8. The mobile terminal of claim 1, wherein the controller(180) is further configured to cause the touch screen(151) to:
display a graphic object associated with the widget page on the one of the plurality of home screen pages; and
change at least a shape, a color, a size or an animation effect of the graphic object in response to the received information.

9. The mobile terminal of claim 8, wherein the controller(180) is further configured to cause the touch screen(151) to display the widget page including the received information in response to selection of the graphic object.

10. The mobile terminal of claim 1, wherein the controller(180) is further configured to cause the touch screen(151) to display the widget page on a lock screen indicating that the mobile terminal is in a lock state in response to the information received while the mobile terminal is in the lock state.

11. The mobile terminal of claim 10, wherein the controller(180) is further configured to cause the touch screen(151) to display the received information on the lock screen while the mobile terminal is in the lock state in response to user input applied via the displayed widget page.

12. The mobile terminal of claim 10, wherein the controller(180) is further configured to cause the touch screen(151) to:
display a graphic object indicating the widget page on the lock screen in response to the received information; and
display the widget page on the lock screen in response to selection of the graphic object.

13. The mobile terminal of claim 10, wherein the controller(180) is further configured to cause the touch screen(151) to no longer display the widget page on the lock screen in response to a preset touch input applied to the widget page.

14. The mobile terminal of claim 1, wherein:
the external device is pre-selected by a user;
the information received from the external device is information satisfying a preset condition; and
the controller(180) is further configured to cause the touch screen(151) to display an information list including items corresponding to a plurality of information received from the external device.

15. A control method for a mobile terminal, the method comprising:
receiving information from an external device while one of a plurality of home screen pages is displayed on a touch screen(151);
generating a widget page including the received information, wherein the widget page is a home screen page that is newly generated in addition to the plurality of home screen pages;
displaying notification information notifying the generated widget page on one of the plurality of home screen pages; and
displaying the widget page on the touch screen(151) in response to selection of the notification information.
